# EUROPÄISCHE PATENTSCHRIFT

(11) **EP 0 826 536 B1**
(45) Veröffentlichungstag und Bekanntmachung des Hinweises auf die Patenterteilung: **31.07.2002**
(21) Anmeldenummer: 97114626.1
(22) Anmeldetag: 23.08.1997
(51) Int. Cl.: B60J 7/043

(54) **Fahrzeugdach**
Vehicle roof
Toit de véhicule

(30) Priorität: 28.08.1996 DE 19634854
(43) Veröffentlichungstag der Anmeldung: 04.03.1998
(73) Patentinhaber: WEBASTO THERMOSYSTEME GmbH, D-82131 Stockdorf (DE)
(72) Erfinder: Poppele, Gebhard, 82294 Oberschweinbach (DE); Himmel, Franz, 84181 Neufraunhofen (DE)
(74) Vertreter: Wiese, Gerhard

(56) Entgegenhaltungen:
- DE-A- 3 438 360
- DE-C- 3 908 239

## Beschreibung

Die Erfindung betrifft ein Fahrzeugdach mit einer von mindestens einem Deckel verschließbaren Dachöffnung in einer festen Dachhaut, wobei die Vorderkante des Deckels mittels einer Ausschwenkmechanik über die feste Dachhaut anhebbar ist, die Hinterkante des Deckels mittels einer Ausstellmechanik über die feste Dachhaut anhebbar ist und der Deckel mittels einer Schiebemechanik gegenüber der festen Dachhaut nach hinten verschiebbar ist.

Ein solches Fahrzeugdach ist aus der gattungsgemäßen DE 39 03 035 A1 bekannt. Das Anheben der Deckelvorderkante erfolgt dabei aus der Schließstellung gleichzeitig mit dem Anheben der Deckelhinterkante. Dabei wird die Deckelvorderkante um einen geringeren Betrag als die Deckelhinterkante angehoben, damit der Deckel für den Zurückschiebevorgang von einer Randabdichtung freikommt. Die Ausschwenkmechanik für die Deckelvorderkante und die Ausstellmechanik für die Deckelhinterkante weisen jeweils einen Schlitten mit einem Kulissenstift auf, der in eine deckelfeste Kulissenbahn eingreift. Zu Anfang des Öffnungsvorgangs sind die Schlitten der Ausschwenk- bzw. Ausstellmechanik gekoppelt. Beim weiteren Öffnungsvorgang wird der Deckel mittels der Schiebemechanik nach hinten über die feste Dachhaut geschoben, um die Dachöffnung freizulegen. Die Schlitten werden im Verlauf dieser Bewegung voneinander entkoppelt. Die Ausschwenk-, die Ausstell- und die Schiebemechanik sind auf einem Rahmen montiert, der zur Entlüftung des Fahrzeuginnenraums bei nicht zurückgeschobenem bzw. nicht mit der Hinterkante angehobenem Deckel an seiner Vorderseite manuell über einen Drehgriff aus der Schließstellung abgesenkt werden kann. Durch das Absenken des Rahmens aus der Schließstellung des Deckels wird der Deckel im Bereich seiner Vorderkante unter Bildung eines unterhalb der Dachhaut liegenden Lüftungsspalts abgesenkt. Nachteilig bei diesem bekannten Fahrzeugdach ist, daß bei nicht zurückgeschobenem bzw. nicht mit der Hinterkante ausgestelltem Deckel durch das Absenken der Deckelvorderkante nur eine relative begrenzte Lüftungsfunktion möglich ist.

Bei einem anderen, aus DE 34 38 360 C2 bekannten Fahrzeugdach ist die Vorderkante des Deckels mittels eines deckelfesten Kulissenstifts, der in einem in Dachlängsrichtung verschiebbaren Kulissenschlitz verschiebbar geführt ist, zu Lüftungszwecken aus der Schließstellung des Deckels ausschwenkbar. Ferner kann die Deckelhinterkante aus der Schließstellung mittels eines Hebelmechanismus unter die feste Dachhaut abgesenkt werden, um anschließend zwecks Freilegen der Dachöffnung nach hinten unter die feste Dachhaut verschoben zu werden. Ein Nachteil dieses Daches ist, daß die Größe der Dachöffnung stark beschränkt ist, weil hinter der Dachöffnung unter der Dachhaut ein mindestens der Deckellänge entsprechender Raum erforderlich ist.

Aus DE 33 24 032 C3 ist ein Fahrzeugdach mit einer mit ihrem vorderen Ende dachfest angelenkten und an ihrem hinteren Ende ausstellbaren Führungsschiene bekannt. In dieser Führungsschiene sind ein vorderes und ein hinteres Trägerelement verschiebbar geführt. Das vordere Trägerelement ist fest mit einem Deckel verbunden, der zum Verschließen einer Dachöffnung in der festen Dachhaut vorgesehen ist. Das hintere Trägerelement ist entlang eines deckelfesten Kulissenschlitzes verschiebbar geführt. Ein Ausstellen der Führungsschiene mit anschließendem Verschieben des Deckels nach hinten führt zu einem Anheben der Deckelhinterkante über die feste Dachhaut, wobei der Deckel in seiner Endstellung die Dachöffnung weitgehend freilegt. Nachteilig bei diesem bekannten Fahrzeugdach ist, daß die Lüftungsfunktion bei nicht aus der Schließstellung zurückgeschobenem Deckel, das heißt bei nicht freigelegter Dachöffnung, relativ unflexibel ist und nur sehr beschränkt den individuellen Bedürfnissen der Fahrzeuginsassen angepaßt werden kann.

Aus DE 37 25 982 A1 ist eine Fahrzeugdach mit zwei in Dachlängsrichtung übereinanderschiebbaren Dachteilen bzw. Deckeln bekannt, wobei die Deckel jeweils um eine feste Achse entweder nahe der jeweiligen Deckelvorderkante oder nahe der jeweiligen Deckelhinterkante schwenkbar sind. Zweideckeldächer sind in der Praxis schon wegen des hohen Fertigungs- und Montageaufwands häufig unerwünscht. Für jeden Deckel alleine ist aber entweder nur eine bekannte Spoilerdachfunktion oder die aus DE 34 38 360 C2 bzw. aus DE 39 03 035 A1 bekannte modifizierte Schiebedachfunktionen möglich.

Aus DE-AS 1 405 799 ist eine Ventilationsklappe für ein Fahrzeugdach bekannt, die einen eine Dachöffnung wahlweise verschließenden rechteckigen Deckel aufweist, der ausgehend von der Schließstellung so verschwenkt werden kann, daß alternativ jeweils eine beliebige seiner Umfangskanten als einzige Kante über die feste Dachhaut angehoben ist oder daß der ganze Deckel parallel zur Dachhaut angehoben ist. Dabei ist ein Freilegen der Dachöffnung nicht möglich.

Es ist Aufgabe der vorliegenden Erfindung, ein Fahrzeugdach bereitzustellen, welches die oben genannten Nachteile bekannter Fahrzeugdächer vermeidet. Insbesondere soll ein Fahrzeugdach geschaffen werden, das einerseits das Freilegen einer relativ großen Dachöffnung im Verhältnis zu dem hinter der Dachöffnung verfügbarem Raum unter der Dachhaut erlaubt und somit auch gut für Nutzfahrzeugkabinen einsetzbar ist, und das andererseits auch ohne Freilegen der Dachöffnung durch Verschieben des Deckels eine gute Lüftungsfunktion ermöglicht, die an die jeweiligen Bedürfnisse der Fahrzeuginsassen flexibel angepaßt werden kann.

Diese Aufgabe wird ausgehend von einem Fahrzeugdach mit den eingangs genannten Merkmalen dadurch gelöst, daß die Ausschwenkmechanik und die Ausstellmechanik zur jeder zeitigen unabhängigen Betätigbarkeit voneinander entkoppelt sind und die Deckelvorderkante zu Lüftungszwecken ausschwenkbar ist.

Die erfindungsgemäße Lösung hat den Vorteil, daß einerseits eine gute, flexibel variable Lüftungsfunktion bei nicht freigelegter Dachöffnung, d.h. bei nicht zurückgeschobenem Deckel, durch wahlweises Anheben der Deckelvorderkante und/oder der Deckelhinterkante möglich ist, und daß sich andererseits die Dachöffnung wahlweise auch bei angehobener Vorderkante freilegen läßt, ohne daß die Größe der Dachöffnung durch den hinter der Dachöffnung zur Verfügung stehenden Raum unter der Dachhaut beschränkt ist.

In weiterer, vorteilhafter Ausgestaltung der Erfindung ist vorgesehen, daß ein vorn ausschwenkbarer Rahmen vorgesehen ist, in welchem der Deckel verschiebbar gelagert ist, wobei der Rahmen bevorzugt mittels eines im vorderen Teil des Rahmens angebrachten Klappgriffs manuell ausschwenkbar ist. Auf diese Weise kann die Ausschwenkfunktion des Deckels besonders einfach und zuverlässig realisiert werden. Es versteht sich jedoch, daß anstelle eines manuellen Antriebes auch ein elektrischer, pneumatischer oder hydraulischer Motorantrieb vorgesehen sein kann und daß statt eines Klappgriffes auch andere mechanische Betätigungseinrichtungen, wie Spindeln, Scherengetriebe oder dergleichen, verwendet werden können.

Ferner ist bevorzugt vorgesehen, daß der Deckel beidseitig mit jeweils mit einem Halteelement versehen ist, welches mit einem daran vorgesehen vorderen Abschnitt den Schiebeeingriff mit dem Rahmen bewirkt. Vorzugsweise ist die Ausstellmechanik in dem den Schiebeeingriff bewirkenden vorderen Abschnitt ausgebildet, und sie weist außerdem bevorzugt einen von einem drucksteifen Antriebskabel angetriebenen, entlang des Rahmens verschiebbaren Schlitten mit einem in einem deckelfesten Kulissenschlitz geführten Kulissenstift auf. Diese Merkmale tragen dazu bei, die Ausstell- und Verschiebefunktionen besonders einfach und zuverlässig zu verwirklichen.

Außerdem ist das Fahrzeugdach vorzugsweise so ausgebildet, daß der Deckel bei ausgeschwenkter Deckelvorderkante nur so weit verschiebbar ist, daß keine Beschädigungen des Deckels bzw. der Mechanik oder der Dichtung auftreten.

Weitere bevorzugte Ausgestaltungen der Erfindung ergeben sich aus den Unteransprüchen.

Im folgenden ist eine Ausführungsform der Erfindung anhand der beiliegenden Zeichnungen näher erläutert. Es zeigen:
- FIG. 1: eine perspektivische Ansicht eines erfindungsgemäßen Fahrzeugdaches bei ausgeschwenkter Deckelvorderkante;
- FIG. 2: eine schematische Seitenansicht des Fahrzeugdaches aus FIG. 1, jedoch bei geschlossenem Deckel.
- FIG. 3: eine Ansicht wie FIG. 2, jedoch mit in einer ersten Öffnungsstellung befindlichem Deckel;
- FIG. 4: eine Ansicht wie FIG. 2, jedoch mit in einer zweiten Öffnungsstellung befindlichem Deckel;
- FIG. 5: eine Ansicht wie FIG. 2, jedoch mit in einer dritten Öffnungsstellung befindlichem Deckel;
- FIG. 6: eine Ansicht wie FIG. 2, jedoch mit in einer vierten Öffnungsstellung befindlichem Deckel;
- FIG. 7: den Handgriff aus den FIGN. 2 bis 6 in einer vergrößerten Darstellung; und
- FIG. 8: den vorderen Abschnitt des Haltelements des Fahrzeugdaches aus FIG. 1 in vergrößerter Darstellung bei abgenommener Blende.

Mit "Ausschwenken" bzw. "Schwenken" ist eine Bewegung des Deckels bezeichnet, bei welcher die in normaler Fahrtrichtung vorne liegende Kante des Deckels (Deckelvorderkante) um eine Drehachse nahe der in normaler Fahrtrichtung hinten liegenden Kante des Deckels (Deckelhinterkante) bezüglich der Dachhaut angehoben oder abgesenkt wird.

Mit "Ausstellen" ist eine Bewegung des Deckels bezeichnet, bei welcher die Deckelhinterkante um eine Drehachse nahe der Deckelvorderkante bezüglich der Dachhaut angehoben oder abgesenkt wird.

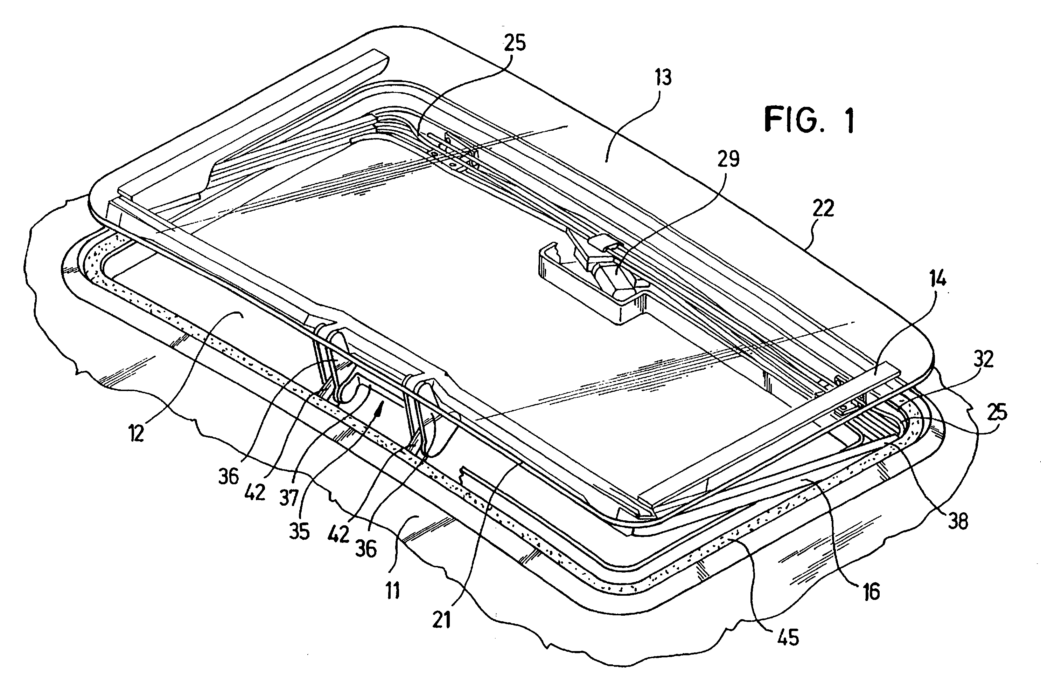

In FIG. 1 ist in perspektivischer Darstellung ein Fahrzeugdach gezeigt, bei dem in einer festen Dachhaut 11 eine Dachöffnung 12 ausgebildet ist, die von einem Deckel 13 verschließbar ist, der im vorliegenden Ausführungsbeispiel lichtdurchlässig (als Glasdeckel) dargestellt ist, bei dem es sich aber ohne weiteres auch um einen undurchsichtigen Deckel (Blechdeckel) handeln kann. Der Deckel 13 legt sich in der Schließposition von oben her an eine die Dachöffnung 12 umgebende Dichtung 45 an. Der Deckel 13 ist zu beiden Seiten auf jeweils einem Halteelement 14 befestigt, welches einen vorderen Abschnitt 15 aufweist, der in Schiebeeingriff mit einem Rahmen 16 steht. Zu diesem Zweck weist der Rahmen 16 zu beiden Seiten eine Führungsschiene 17 auf in welche auf bekannte Weise ein an dem vorderen Abschnitt 15 angelenktes verschiebbares Gleitelement 18 eingreift. Der vordere Abschnitt 15 weist ferner eine an sich bekannte Ausstellmechanik 20 zum Ausstellen des Deckels 13 auf, wobei der Deckel 13 um eine nahe der Deckelvorderkante 21 liegende Achse gedreht wird, so daß sich die Deckelhinterkante 22 über die feste Dachhaut 11 anhebt.

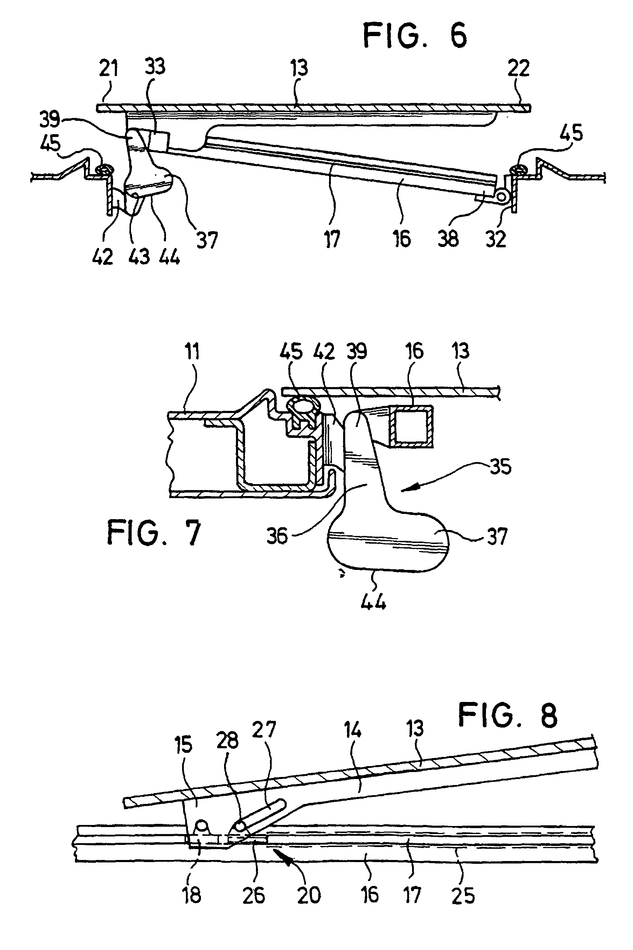

Die Ausstellmechanik 20 weist zu beiden Seiten des Deckels 13 gemäß FIG. 8 jeweils einen von einem drucksteifen Antriebskabel 25 angetriebenen, entlang des Rahmens 16 verschiebbaren Schlitten 26 mit einem in einem deckelfesten Kulissenschlitz 27 geführten Kulissenstift 28 auf. Die Antriebskabel 25 der beiden Schlitten 26 werden von einem elektrischen Antrieb 29 angetrieben. Die Ausstellmechanik 20 ist durch eine Blende 31 gegen Sicht von außen verdeckt.

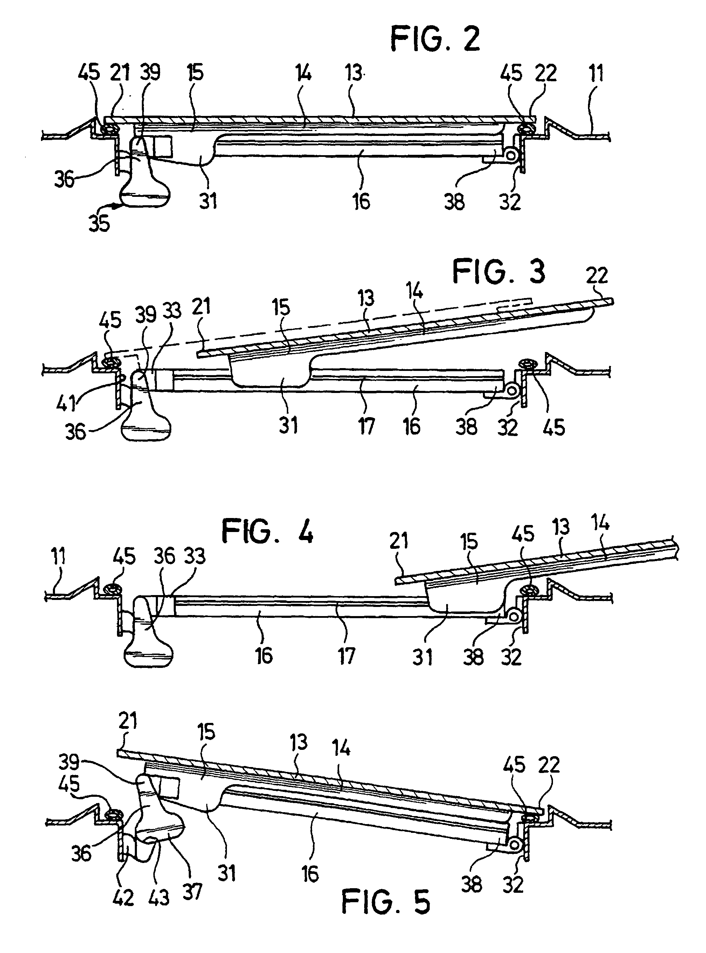

Ein Verschieben des Schlittens 26 entlang der Führungsschiene 17 aus der in FIG. 2 gezeigten Schließstellung des Deckels 13 nach vorn bewirkt ein Anheben der Deckelhinterkante 22 über die feste Dachhaut 11 in die in FIG. 3 mit unterbrochenen Linien gezeigte erste Öffnungsstellung (Ausstell-Stellung), in der ein Lüftungsspalt zwischen der Deckelhinterkante 22 und dem hinteren Rand 32 der Dachöffnung 12 gebildet wird. Aus dieser Stellung mit angehobener Deckelhinterkante 22 kann der Deckel 13 bezüglich der festen Dachhaut 11 über eine in FIG. 3 mit durchgezogenen Linien dargestellte Zwischenposition nach hinten in eine in FIG. 4 dargestellte zweite Öffnungsstellung geschoben werden, in welcher der Schlitten 26 nahe dem hinteren Rand 32 der Dachöffnung 12 steht. Die Dachöffnung 12 ist nun für eine Durchsicht und eine starke Lüftungswirkung weitgehend freigelegt.

Die bisher geschilderte Funktionsweise des Deckels ist bekannt, und ein Fahrzeugdach mit diesen Funktionen wird oft als "Spoilerdach" bezeichnet.

Das vorliegende Fahrzeugdach ermöglicht jedoch weitere Funktionen. Im vorderen Teil 33 des Rahmens 16 ist ein im wesentlichen U-förmiger Klappgriff 35 mit zwei Schaftabschnitten 36 und einem Basisabschnitt 37 vorgesehen, wobei der Rahmen 16 mittels des Klappgriffs 35 manuell vorne ausschwenkbar ist. Der Rahmen 16 ist dazu mit seinem hinteren Ende 38 dachfest angelenkt. Der Basisabschnitt 37 des Klappgriffs 35 ist als Handgriff ausgebildet. An den oberen Enden 39 der Schaftabschnitte 36 ist der Klappgriff 35 am Rahmen 16 angelenkt. An dem vorderen Rand 41 der Dachöffnung 12 sind zwei Nasen 42 vorgesehen, die in der Einschwenkstellung des Rahmens 16 (FIG. 2 bis 4) in Schließeingriff mit den beiden Schaftabschnitten 36 des Klappgriffs 35 stehen. Die Nasen 42 weisen an ihrer Oberseite eine Anlagefläche 43 auf, auf welcher die Unterseite 44 des Basisabschnitts 37 bei ausgeschwenktem Rahmen 16 (FIG. 5 und 6) aufliegt. Der Rahmen 16 ist dabei in dieser Stellung arretiert.

Ausgehend von der in FIG. 2 gezeigten Schließstellung des Deckels 13 kann der Rahmen 16 bei nicht ausgestelltem Deckel 13 manuell durch Betätigung des Klappgriffs 35 entriegelt, in die in FIG. 5 gezeigte dritte Öffnungsstellung gebracht und in dieser Stellung arretiert werden. In dieser Stellung wird an dem vorderen Rand 41 der Dachöffnung 12 ein hinreichend großer Lüftungsspalt ausgebildet, um insbesondere bei fahrendem Fahrzeug eine starke Lüftungswirkung zu erzielen, ohne daß die Dachöffnung 12 durch Zurückschieben des Deckels 13 freigelegt werden müßte. Dabei legt sich die Hinterkante 22 des Deckels 13 an die Dichtung 45 an. Die Lüftungswirkung in der in FIG. 5 gezeigten dritten Öffnungsstellung ist bei fahrendem Fahrzeug wesentlich stärker als in der in FIG. 3 gezeigten ersten Öffnungsstellung, in welcher ein Lüftungsspalt am hinteren Rand 17 der Dachöffnung 12 erzeugt wird.

Ausgehend von der in FIG. 5 gezeigten dritten Öffnungsstellung mit hochgestellter Deckelvorderkante 21 kann der Deckel 13 durch Betätigung der Ausstellmechanik wie oben beschrieben mit seiner Hinterkante 22 ausgestellt werden. Dies führt zu der in FIG. 1 und FIG. 6 gezeigten vierten Öffnungsstellung, in welcher die Deckelhinterkante 22 so weit angehoben ist, daß der Deckel 13 im wesentlichen parallel zu der festen Dachhaut 11 liegt, jedoch nach oben gegenüber dieser angehoben ist, so daß sowohl an der Deckelvorderkante 21 als auch an der Deckelhinterkante 22 ein Lüftungsschlitz besteht. Bei fahrendem Fahrzeug liegt die Lüftungswirkung dieser vierten Öffnungsstellung zwischen derjenigen der ersten bzw. dritten Öffnungsstellung gemäß FIG. 3 bzw. FIG. 5. Bei stehendem Fahrzeug ergibt sich jedoch im allgemeinen in der vierten Öffnungsstellung eine stärkere Lüftungswirkung als in der ersten bzw. dritten Öffnungsstellung. Auch in der vierten Öffnungsstellung gemäß FIG. 6 ist die Dachöffnung nicht durch Zurückschieben des Deckels 13 freigelegt.

Um eine Beschädigung des Deckels bzw. der Mechanik sicher auszuschließen, ist der Deckel 13 vorzugsweise bei ausgeschwenktem Rahmen 16 durch eine Blockade der Schiebemechanik gegen ein Zurückschieben gesichert, obwohl bei ausgestelltem Deckel beispielsweise aus der in FIG. 6 gezeigten Stellung ein Zurückschieben des Deckels 13 zum Freilegen der Dachöffnung 12 an sich möglich wäre. Alternativ kann vorgesehen sein, daß der Deckel 13 nur bei ausgestellter Deckelhinterkante 22 verschiebbar ist.

Die Ausschwenkmechanik des Deckels ist nicht auf die in dem obigen Ausführungsbeispiel geschilderte manuelle Betätigung mit Arretierungsmöglichkeiten in zwei Stellungen beschränkt. So können auch mehrere Arretierungspositionen vorgesehen sein, oder der Deckel kann stufenlos ausgeschwenkt werden. In dem letzteren Fall ist vorzugsweise an Stelle der manuellen Betätigung ein elektrischer Antrieb vorgesehen, der beispielsweise über ein drucksteifes Antriebskabel einen dachfest geführten Schlitten antreibt, der über einen an dem Schlitten und dem Rahmen angelenkten Hebelarm das Ausschwenken des Rahmens bewirkt.

An Stelle des elektrischen Antriebs der Ausstell- bzw. Schiebemechanik kann in bekannter Weise ein manueller Kurbelantrieb vorgesehen sein.

Bei der speziellen Ausbildung der Ausschwenk- und Ausstellmechanik des Deckel ist nur wesentlich, daß die Ausstellmechanik und die Ausschwenkmechanik des Deckels vollständig voneinander entkoppelt sind, d.h. daß sie völlig unabhängig voneinander betätigt werden können.

Unter Fahrzeug sind in Verbindung mit dem Gattungsbegriff Fahrzeugdach alle Land-, Wasserund Luftfahrzeuge zu verstehen.

### Bezugszeichenliste

- Dachhaut: **11**
- Dachöffnung: **12**
- Deckel: **13**
- Halteelement: **14**
- vorderer Abschnitt: **15**
- Rahmen: **16**
- Führungsschiene: **1**7
- Gleitelement: **18**
**19**
- Ausstellmechanik: **20**
- Deckelvorderkante: **21**
- Deckelhinterkante: **22**
**23**
**24**
- Antriebskabel: **25**
- Schlitten: **26**
- Kulissenschlitz: **27**
- Kulissenstift: **28**
- elektrischer Antrieb: **29**
**30**
- Blende: **31**
- hinterer Rand von 12: **32**
- vorderer Teil von 16: **33**
**34**
- Klappgriff: **35**
- Schaftabschnitt: **36**
- Basisabschnitt: **37**

- hinteres Ende von 16: **38**
- oberes Ende von 36: **39**
**40**
- vorderer Rand von 12: **41**
- Nase: **42**
- Anlagefläche: **43**
- Unterseite von 37: **44**
- Dichtung: **45**

## Patentansprüche

1. Fahrzeugdach mit einer von mindestens einem Deckel (13) verschließbaren Dachöffnung (12) in einer festen Dachhaut (11), wobei die Deckelvorderkante (21) mittels einer Ausschwenkmechanik (16; 35) über die feste Dachhaut anhebbar ist, die Deckelhinterkante (22) mittels einer Ausstellmechanik (20) über die feste Dachhaut anhebbar ist und der Deckel (13) mittels einer Schiebemechanik gegenüber der festen Dachhaut (11) nach hinten verschiebbar ist, **dadurch gekennzeichnet, daß** die Ausschwenkmechanik (16, 35) und die Ausstellmechanik (20) zur jederzeitigen unabhängigen Betätigbarkeit voneinander entkoppelt sind und die Deckelvorderkante (21) zu Lüftungszwecken ausschwenkbar ist.

2. Fahrzeugdach nach Anspruch 1, **dadurch gekennzeichnet, daß** ein vorn ausschwenkbarer Rahmen (16) vorgesehen ist, an welchem der Deckel (13) verschiebbar gelagert ist.

3. Fahrzeugdach nach Anspruch 2, **dadurch gekennzeichnet, daß** der Rahmen (16) an seinem hinteren Ende (38) an einem dachfesten Teil angelenkt ist.

4. Fahrzeugdach nach Anspruch 3, **dadurch gekennzeichnet, daß** der Deckel (13) beidseitig mit jeweils einem Halteelement (14) versehen ist, das mit einem daran vorgesehen vorderen Abschnitt (15) den Schiebeeingriff mit dem Rahmen (16) bewirkt.

5. Fahrzeugdach nach Anspruch 4, **dadurch gekennzeichnet, daß** die Ausstellmechanik (20) in dem den Schiebeeingriff bewirkenden vorderen Abschnitt (15) ausgebildet ist.

6. Fahrzeugdach nach Anspruch 5, **dadurch gekennzeichnet, daß** die Ausstellmechanik (20) einen von einem drucksteifen Antriebskabel (25) angetriebenen, entlang des Rahmens (16) verschiebbaren Schlitten (26) mit einem in einem deckelfesten Kulissenschlitz (27) geführten Kulissenstift (28) aufweist.

7. Fahrzeugdach nach einem der Ansprüche 3 bis 6, **dadurch gekennzeichnet, daß** der Rahmen (16) mittels eines im vorderen Teil (33) des Rahmens angebrachten Klappgriffs (35) manuell ausschwenkbar ist.

8. Fahrzeugdach nach Anspruch 7, **dadurch gekennzeichnet, daß** der Klappgriff (35) in Schließstellung und in der ausgeschwenkten Endstellung des Rahmens (16) sowie beliebigen Zwischenstellungen arretierbar ist.

9. Fahrzeugdach nach Anspruch 8, **dadurch gekennzeichnet, daß** der Klappgriff (35) mit seinem oberen Ende (39) rahmenfest angelenkt ist, während sein unteres Ende (27) in ausgeschwenkter Endstellung auf einem dachfesten Gegenstück (42) aufliegt.

10. Fahrzeugdach nach Anspruch 9, **dadurch gekennzeichnet, daß** der Klappgriff (35) in Schließstellung des Rahmens (16) arretiert ist.

11. Fahrzeugdach nach einem der vorhergehenden Ansprüche, **dadurch gekennzeichnet, daß** der Deckel (13) auch bei ausgeschwenkter Deckelvorderkante (21) verschiebbar ist.

12. Fahrzeugdach nach Anspruch 11, **dadurch gekennzeichnet, daß** der Deckel (13) nur bei ausgestellter Deckelhinterkante (22) verschiebbar ist.

13. Fahrzeugdach nach Anspruch 11 oder 12, **dadurch gekennzeichnet, daß** die Deckelhinterkante (22) bei ausgeschwenkter Deckelvorderkante (21) ausstellbar bzw. aus der Ausstellstellung absenkbar ist.

14. Fahrzeugdach nach einem der vorhergehenden Ansprüche, **dadurch gekennzeichnet, daß** das Fahrzeugdach für eine Nutzfahrzeugkabine oder einen Omnibus vorgesehen ist.

## Claims

1. A vehicle roof with a roof opening (12) in a fixed roof skin (11) and which is adapted to be closed by at least one cover (13), the front edge (21) of the said cover being adapted to be pivoted outwardly by a mechanism (16; 35) and over the fixed roof skin, the rear edge (22) of the cover being adapted to be raised by a mechanism (20) which pushes it out beyond the fixed roof skin, the cover (13) being adapted to be displaced rearwardly in relation to the fixed roof skin (11) by a displacing mechanism, **characterised in that** the outwards-pivoting mechanism (16; 35) and the outwards-positioning mechanism (20) can be uncoupled from each other at any time for independent actuation and **in that** the front edge (21) of the cover can be pivoted outwards for ventilation purposes.

2. A vehicle roof according to claim 1, **characterised in that** a frame (16) on which the cover (13) is mounted for displacement can be pivoted outwardly and forwards.

3. A vehicle roof according to claim 2, **characterised in that** the frame (16) is, at its rear end (38), articulated on a part which is rigid with the roof.

4. A vehicle roof according to claim 3, **characterised in that** the cover (13) has on each of its two sides a retaining element which produces the pushing engagement with the frame (16) by a front portion (15) which is provided thereon.

5. A vehicle roof according to claim 4, **characterised in that** the outward positioning mechanism (20) is constructed in the front portion (15) which produces the pushing engagement.

6. A vehicle roof according to claim 5, **characterised in that** the push-out mechanism (20) comprises a sliding unit (26) adapted for displacement along the frame (16) and driven by a compression-resistant drive cable (25) and which has a sliding pin (28) which is guided in a slot (27) which is rigid with the cover.

7. A vehicle roof according to one of claims 3 to 6, **characterised in that** the frame (16) can be pivoted outwardly manually by means of a hinged handle (35) mounted in the front part (35) of the frame.

8. A vehicle roof according to claim 7, **characterised in that** the hinged handle (35) can be locked in the closed position and in the outwardly pivoted position of the frame (16) as well as in any desired intermediate positions.

9. A vehicle roof according to claim 8, **characterised in that** the hinged handle (35) has its upper end (39) articulated on the frame while its bottom end (27) rests on a mating part (42) rigid with the roof when the extreme outwardly pivoted position is reached.

10. A vehicle roof according to claim 9, **characterised in that** the hinged handle (35) is locked when the frame (16) is in the closed position.

11. A vehicle roof according to one of the preceding claims, **characterised in that** the cover (13) is displaceable also when the front edge (21) of the cover is outwardly pivoted.

12. A vehicle roof according to claim 11, **characterised in that** the cover (13) is only displaceable when the rear edge (22) of the cover is pushed out.

13. A vehicle roof according to claim 11 or 12, **characterised in that** the rear edge (22) of the cover can be pushed out when the front edge (21) of the cover is outwardly pivoted or can be lowered from the pushed out position.

14. A vehicle roof according to one of the preceding claims, **characterised in that** the vehicle roof is provided for the driver's cab of a utility vehicle or for an omnibus.

## Revendications

1. Toit de véhicule comportant une ouverture (12) pratiquée dans une tôle fixe de pavillon (11) et pouvant être obturée par au moins un capot (13), le bord antérieur (21) du capot pouvant être soulevé au-dessus de la tôle fixe de pavillon, au moyen d'un mécanisme (16 ; 35) d'excursion pivotante, le bord postérieur (22) dudit capot pouvant être soulevé au-dessus de la tôle fixe de pavillon, au moyen d'un mécanisme d'orientation (20), et ledit capot (13) pouvant être animé de coulissements vers l'arrière vis-à-vis de ladite tôle fixe de pavillon (11), au moyen d'un mécanisme de coulissement, **caractérisé par le fait que** le mécanisme (16, 35) d'excursion pivotante et le mécanisme d'orientation (20) sont dissociés l'un de l'autre en vue de l'aptitude fonctionnelle indépendante et permanente, et le bord antérieur (21) du capot peut être sorti par pivotement, à des fins de ventilation.

2. Toit de véhicule selon la revendication 1, **caractérisé par le fait qu'**il est prévu un cadre (16) pouvant être sorti par pivotement vers l'avant, et sur lequel le capot (13) est monté à coulissement.

3. Toit de véhicule selon la revendication 2, **caractérisé par le fait que** le cadre (16) est articulé, par son extrémité postérieure (38), sur une pièce faisant corps avec le pavillon.

4. Toit de véhicule selon la revendication 3, **caractérisé par le fait que** le capot (13) est pourvu, de part et d'autre, d'un élément respectif de retenue (14) provoquant la venue en prise coulissante, avec le cadre (16), par une région antérieure (15) prévue sur ledit élément.

5. Toit de véhicule selon la revendication 4, **caractérisé par le fait que** le mécanisme d'orientation (20) est ménagé dans la région antérieure (15) provoquant la venue en prise coulissante.

6. Toit de véhicule selon la revendication 5, **caractérisé par le fait que** le mécanisme d'orientation (20) comporte un chariot (26) qui est mené par un câble d'entraînement (25) rigide à la pression, peut coulisser le long du cadre (16), et est muni d'un téton coulissant (28) guidé dans une fente de coulissement (27) faisant corps avec le capot.

7. Toit de véhicule selon l'une des revendications 3 à 6, **caractérisé par le fait que** le cadre (16) peut être sorti par pivotement manuel, au moyen d'une poignée rabattable (35) montée dans la partie antérieure (33) dudit cadre.

8. Toit de véhicule selon la revendication 7, **caractérisé par le fait que** la poignée rabattable (35) peut être arrêtée en position fermée et dans la position extrême du cadre (16) prise par pivotement sortant, ainsi que dans n'importe quelles positions intermédiaires.

9. Toit de véhicule selon la revendication 8, **caractérisé par le fait que** la poignée rabattable (35) est articulée de façon rigide sur le cadre, par son extrémité supérieure (39), tandis que son extrémité inférieure (27) repose, en position extrême prise par pivotement sortant, sur une pièce complémentaire (42) faisant corps avec le pavillon.

10. Toit de véhicule selon la revendication 9, **caractérisé par le fait que** la poignée rabattable (35) est arrêtée en position fermée du cadre (16).

11. Toit de véhicule selon l'une des revendications précédentes, **caractérisé par le fait que** le capot (13) peut coulisser également lorsque le bord antérieur (21) dudit capot est sorti par pivotement.

12. Toit de véhicule selon la revendication 11, **caractérisé par le fait que** le capot (13) peut coulisser uniquement lorsque le bord postérieur (22) dudit capot est orienté.

13. Toit de véhicule selon la revendication 11 ou 12, **caractérisé par le fait que** le bord postérieur (22) du capot peut être respectivement orienté, ou abaissé à partir de la position orientée, lorsque le bord antérieur (21) dudit capot est sorti par pivotement.

14. Toit de véhicule selon l'une des revendications précédentes, **caractérisé par le fait que** ledit toit de véhicule est prévu pour une cabine de véhicule utilitaire ou pour un omnibus.
